# EUROPÄISCHE PATENTANMELDUNG

(11) **EP 4 775 856 A1**
(43) Veröffentlichungstag der Anmeldung: **15.07.2026**
(21) Anmeldenummer: 25150877.6
(22) Anmeldetag: 09.01.2025
(51) Int. Cl.: F16K 11/08, B29C 49/20, F16K 27/06

(54) **VERTEILANORDNUNG, ANORDNUNG UND VERFAHREN ZUR HERSTELLUNG EINER VERTEILANORDNUNG**

(71) Anmelder: TI Automotive Technology Center GmbH, 76437 Rastatt (DE)
(72) Erfinder: Kizilay, Irfan, 68799 Reilingen (DE); Lindow, Manuel, 76593 Gernsbach (DE); Leipold, Stefan, 67470 Seltz (FR)
(74) Vertreter: Reiser & Partner Patentanwälte mbB

(57) **Zusammenfassung**

Verteilanordnung (1), umfassend ein als Blasformteil ausgebildetes Gehäuse (3) mit einer Kammer (4), wobei in die Kammer (4) zumindest ein Fluidkanal (6, 7) mündet, wobei in der Kammer (4) ein Funktionselement beweglich aufgenommen ist, wobei an dem Gehäuse (3) ein Adapterelement (11) zur Aufnahme eines das Funktionselement beeinflussenden Aktors angeordnet ist, dadurch gekennzeichnet, dass das Adapterelement (11) durch Umformen des Gehäuses (3) während des Blasformens an dem Gehäuse (3) festgelegt ist.

## Beschreibung

Die Erfindung betrifft eine Verteilanordnung, umfassend ein als Blasformteil ausgebildetes Gehäuse mit einer Kammer, wobei in die Kammer zumindest ein Fluidkanal mündet, wobei in der Kammer ein Funktionselement beweglich aufgenommen ist, wobei an dem Gehäuse ein Adapterelement zur Aufnahme eines das Funktionselement beeinflussenden Aktors angeordnet ist sowie eine Anordnung und ein Verfahren zur Herstellung einer Verteilanordnung.

Verteilanordnungen kommen beispielsweise in Kühlkreisläufen zum Einsatz, um einen Kühlmittelstrom zu regeln. Dabei ist in die Verteilanordnung eine Kanalstruktur eingebracht, welche den Kühlmittelstrom regelt. In Abhängigkeit von der Ausgestaltung und Anzahl der Fluidöffnungen und der Kanalstruktur können unterschiedliche Kühlkreisläufe beaufschlagt, der Volumenstrom reguliert oder die Durchflussrichtung geregelt werden.

Kühlmittelströme werden in Verteilanordnungen häufig durch Rotationsventile beeinflusst. Diese bieten den Vorteil, dass eine Regelung des Kühlmittelstroms durch Drehen des Ventilkerns erfolgt, wobei der Aktor zum Drehen des Ventilkerns einfach ausgebildet und einfach ansteuerbar ist. Dementsprechend sind Rotationsventile und die entsprechenden Aktoren kostengünstig herstellbar. Zudem weisen Rotationsventile einen geringen Bauraum auf. Des Weiteren können Rotationsventile direkt in die Verteilanordnung integriert werden, wobei die Wandungen der Verteilanordnungen Bestandteile des Rotationsventils sein können, beispielsweise kann das Gehäuse integral mit der Verteilanordnung ausgebildet sein.

Verteilanordnungen kommen beispielsweise in Temperierkreisläufen im Bereich der Elektromobilität zum Einsatz. Akkumulatoren von Elektrofahrzeugen, insbesondere Lithium-Ionen-Akkumulatoren, werden in Abhängigkeit von der Umgebungstemperatur aktiv gekühlt oder erwärmt, da diese eine optimale Leistungsfähigkeit nur innerhalb eines definierten Temperaturbereichs erreichen. Die Antriebseinheit eines Elektrofahrzeugs weist deshalb in der Regel einen Temperierkreislauf auf, durch welchen Temperiermedien zu den Zellen des Akkumulators geleitet werden, um diese innerhalb eines erforderlichen Temperaturspektrums zu temperieren. Ebenso können weitere Komponenten der Antriebseinheit, beispielsweise die Leistungselektronik, der Elektromotor, die Ladeelektronik und die entsprechenden Steckverbindungen und Leitungen, temperiert, insbesondere gekühlt, werden. Ein weiteres Einsatzgebiet von Verteilanordnungen sind stationäre Energiespeicher.

Das Temperiermedium kann in dem Temperierkreislauf je nach Anforderung entweder in einer Heizeinrichtung erwärmt oder in einer Kühleinrichtung gekühlt werden, weshalb solche Temperierkreisläufe ein vergleichsweise komplexes Gebilde darstellen. Rotationsventile ermöglichen eine zuverlässige Regelung des Temperiermedienstroms und können platzsparend in den Temperierkreislauf integriert werden.

Der Erfindung liegt die Aufgabe zugrunde, eine Verteilanordnung bereitzustellen, welche einfach und kostengünstig herstellbar ist. Zudem liegt der Erfindung die Aufgabe zugrunde, ein Verfahren zur Herstellung einer Verteilanordnung vorzuschlagen, durch welches die Verteilanordnung einfach und kostengünstig hergestellt werden kann.

Diese Aufgabe wird mit den Merkmalen der Ansprüche 1, 11 und 13 gelöst. Auf vorteilhafte Ausgestaltungen nehmen jeweils die Unteransprüche Bezug.

Die erfindungsgemäße Verteilanordnung zum Verteilen von Temperiermedien umfasst ein als Blasformteil ausgebildetes Gehäuse mit einer Kammer, wobei in die Kammer zumindest ein Fluidkanal mündet und in der Kammer ein Funktionselement beweglich aufgenommen ist, wobei an dem Gehäuse ein Adapterelement zur Aufnahme eines das Funktionselement beeinflussenden Aktors angeordnet ist und wobei das Adapterelement durch Umformen des Gehäuses während des Blasformens an dem Gehäuse festgelegt ist.

Bei der Verteilanordnung ist folglich vorgesehen, dass das Funktionselement innerhalb des Gehäuses angeordnet ist und der Aktor durch das an dem Gehäuse festgelegte Adapterelement extern an diesem angebracht werden kann. Das Adapterelement bildet somit eine Schnittstelle, über welche der das Funktionselement beeinflussende Aktor direkt oder indirekt mit dem Gehäuse verbunden werden kann.

Das als Blasformteil ausgebildete Gehäuse ermöglicht die Herstellung von Gehäusen mit einer hohen Formenvielfalt, wohingegen das an dem Gehäuse festgelegte Adapterelement eine sichere Aufnahme des Aktors ermöglicht, wobei die Konnektivität des Adapterelements an einen konkret ausgewählten Aktor angepasst sein kann. Diese ist dadurch erreicht, dass durch eine entsprechende Ausgestaltung des Adapterelements verschiedenartige Aktoren durch dieses aufgenommen werden können. Folglich erfordert das Aufnehmen verschiedenartiger Aktoren lediglich eine entsprechende Anpassung des Adapterelements an den jeweiligen Aktor und nicht des gesamten Gehäuses, sodass dieses als standardisierte Komponente ausgebildet sein kann. Diese flexible Anpassbarkeit des Ventils an unterschiedliche Aktoren kann eine einfache, schnelle und kostengünstige Herstellung des Ventils ermöglichen.

In einer Ausgestaltung kann das Adapterelement durch Umformen des Gehäuses während des Blasformens integral mit dem Gehäuse ausgebildet sein.

Insbesondere können das Gehäuse und das Adapterelement als ein integrales Blasformteil ausgebildet sein. Mit anderen Worten, das Gehäuse und das Adapterelement können einen einstückigen, integralen Grundkörper bilden. Dabei können das Gehäuse und das Adapterelement sowohl durch das Blasformen nur eines Vorformlings oder durch das Blasformen mehrerer Vorformlinge ausgebildet sein. Indem das Gehäuse und das Adapterelement ein integrales Blasformteil bilden, kann eine besonders schnelle und kostengünstige Herstellung der Verteilanordnung ermöglicht sein.

Eine alternative Ausführungsform der Verteilanordnung kann vorsehen, dass das Adapterelement formschlüssig und/oder stoffschlüssig mit dem Gehäuse verbunden ist.

Vorzugsweise bilden das Adapterelement und das Gehäuse separate Komponenten, die durch das Blasformen formschlüssig und/oder stoffschlüssig miteinander verbunden sind. Das Adapterelement kann beispielsweise als Formteil bereitgestellt und durch das Blasformen des Vorformlings zum Gehäuse mit diesem verbunden sein. Durch die formschlüssige und/oder stoffschlüssige Verbindung zwischen dem Gehäuse und dem Adapterelement können beide Teile fest und mediendicht miteinander verbunden sein. Zwischen dem Gehäuse und dem Adapterelement sind somit keine zusätzlichen Dichtungselemente erforderlich.

Dabei kann das Adapterelement eine beliebige geometrische Ausgestaltung aufweisen, beispielsweise kann dieses in einer Draufsicht eine im Wesentlichen scheibenförmige, insbesondere kreisförmige oder ovale, Grundfläche bilden. Ebenso kann das Adapterelement eine eckige oder freiförmige Grundfläche bilden. Vorzugsweise ist das Adapterelement aus einem Polymermaterial, beispielsweise einem thermoplastischen Polymer, ausgebildet. Das Material des Adapterelements ist insbesondere derart gewählt, dass das Adapterelement während des Blasformens formstabil ist. Vorteilhafterweise liegt die Schmelztemperatur des für das Adapterelement gewählten Kunststoffs daher oberhalb einer für das Blasformen des Vorformlings zum Ausbilden des Gehäuses erforderlichen Temperatur. Alternativ kann das Adapterelement auch aus einem metallischen Werkstoff ausgebildet sein.

Eine weitere vorteilhafte Ausführungsform des Ventils kann vorsehen, dass das Adapterelement mehrere Formschlusselemente aufweist, die mit dem Gehäuse verbunden sind. Durch die Formschlusselemente kann zumindest die formschlüssige Verbindung zwischen dem Gehäuse und dem Adapterelement ausgebildet sein.

Insbesondere kann das Gehäuse durch das Umformen während des Blasformens an die Formschlusselement angelegt sein, beispielsweise an diese angreifen oder in diese eingreifen. Die Formschlusselemente können in Form von Ausnehmungen und/oder Vertiefungen an dem Adapterelement ausgebildet sein, wobei sich das Gehäuse zur Ausbildung der formschlüssigen Verbindung zumindest teilweise in diese hinein erstreckt.

Die Verteilanordnung kann als Ventil, insbesondere als Rotationsventil, ausgebildet sein. Bei dieser Ausgestaltung bildet das Funktionselement einen Ventilkern und das Gehäuse ein Ventilgehäuse. In der Ausgestaltung als Rotationsventil ist der Ventilkern drehbar in dem Ventilgehäuse gelagert. Insbesondere kann der Ventilkern innerhalb der Ventilkammer eine rotatorische Bewegung ausführen, ist jedoch daran gehindert, sich relativ zum Ventilgehäuse in axialer Richtung zu bewegen. Vorzugsweise ist der Ventilkern verliersicher in der Ventilkammer aufgenommen. Dadurch kann sowohl eine einfache und kompakte Integration des Ventilkerns in das Ventilgehäuse als auch eine vereinfachte Ausgestaltung des Ventilgehäuses ermöglicht sein.

Gemäß einer Ausgestaltung des Ventils kann das Funktionselement mit einer Antriebswelle versehen sein, die aus dem Gehäuse durch eine in dem Gehäuse vorgesehene Öffnung herausgeführt ist. Vorzugsweise ist die Antriebswelle radial gelagert und mit dem Ventilkern gekoppelt, sodass die Antriebswelle durch eine rotatorische Drehbewegung eine Stellbewegung des Ventilkerns innerhalb der Ventilkammer bewirkt. Indem die Antriebswelle durch die Öffnung in dem Gehäuse herausgeführt ist, kann diese mit dem am Adapterelement aufgenommenen Aktor koppelbar sein. Dadurch kann die Stellbewegung des Ventilkerns über die Antriebswelle durch den Aktor ansteuerbar sein.

Eine weitere Ausgestaltung der Anordnung kann vorsehen, dass das Adapterelement einen Durchgang aufweist, durch welchen die aus dem Gehäuse herausgeführte Antriebswelle verläuft. Die Antriebswelle kann sich dabei durch den Durchgang unmittelbar vom Ventilkern zu dem auf dem Adapterelement befestigten Aktor erstrecken. Der Durchgang kann die radiale Lagerung der Antriebswelle bilden. Beispielsweise kann der Durchgang mit einer Lagereinrichtung zur Lagerung der Antriebswelle und/oder mit einem Dichtelement versehen sein. Durch den Durchgang im Adapterelement kann somit eine einfache und kompakte Ausgestaltung des Ventils ermöglicht sein.

Vorteilhaft kann bei dem Ventil vorgesehen sein, dass das Adapterelement ein Mittelteil aufweist, in dem der Durchgang ausgebildet ist, und mehrere Halteabschnitte aufweist, durch welche das Adapterelement an dem Gehäuse festgelegt ist.

Das Mittelteil kann einen strukturellen Grundkörper des Adapterelements bilden, an dem die Halteabschnitte ausgebildet sind und/oder von dem sich die Halteabschnitte erstrecken. Der Durchgang kann als Durchbrechung oder Bohrung in dem Mittelteil vorgesehen sein.

Das Mittelteil ist nicht auf eine bestimmte Form beschränkt, beispielsweise kann dieses eine runde, ovale, eckige oder eine beliebige andersartige Form aufweisen. Vorzugsweise kann das Mittelteil kreisringförmig ausgebildet sein. Durch die kreisringförmige Ausgestaltung des Mittelteils kann der Durchgang in einem zentralen Bereich des Mittelteils ausgebildet sein. Die Halteabschnitte können an einem Außenumfang des Mittelteils ausgebildet sein und sich beispielsweise vom Mittelteil weg erstrecken. Die Halteabschnitte können sowohl vollumfänglich als auch abschnittsweise am Außenumfang des Mittelteils ausgebildet sein. Bevorzugt sind die Halteabschnitte integral mit dem Mittelteil ausgebildet.

Gemäß einer vorteilhaften Ausführungsform des Ventils können die Halteabschnitte als Haltearme an dem Mittelteil ausgebildet sein. Die Haltearme können das Mittelteil innerhalb der im Gehäuse vorgesehenen Öffnung positionieren.

Vorzugsweise können die Haltearme in der Weise ausgebildet sein, dass das Mittelteil durch diese in einem radialen Abstand zu einem die Öffnung begrenzenden Randbereich des Gehäuses angeordnet ist. Hierzu kann das Mittelteil insbesondere kleiner als ein Innendurchmesser der Öffnung im Gehäuse ausgebildet sein.

Vorteilhaft können an dem Mittelteil zumindest zwei Haltearme, beispielsweise drei, vier, fünf oder mehr Haltearme, ausgebildet sein. Die Haltearme können sich sternförmig vom Mittelteil des Adapterelements weg erstrecken. Vorzugsweise sind die Haltearme an deren jeweiligen Endabschnitten mit dem Gehäuse formschlüssig und/oder stoffschlüssig verbunden. Hierzu können die Formschlusselement an den Haltearmen, insbesondere an den jeweiligen Endabschnitten der Haltearme, ausgebildet sein.

Eine Weiterbildung des Ventils kann zudem vorsehen, dass das Adapterelement eine Formschlussgeometrie aufweist, die mit einer korrespondierenden Formschlussgeometrie an einem Kopplungselement zur Befestigung des Aktors oder an dem Aktor lösbar gekoppelt ist. Auf diese Weise erfolgt die Arretierung des Adapterelements mit dem Kopplungselement oder dem Aktor über eine formschlüssige Verbindung. Eine solche formschlüssige Verbindung ist einfach herstellbar und kann reversibel gelöst werden, um das Kopplungselement oder den Aktor vom Adapterelement zu trennen. Vorteilhaft können die zueinander korrespondierenden Formschlussgeometrien einen Bajonett-Verschluss bilden.

Das Kopplungselement zur Befestigung des Aktors kann mit Verbindungsmitteln zur Befestigung des Aktors versehen sein. Durch die Verbindungsmittel kann beispielsweise eine Schraubverbindung, Rastverbindung, Clipsverbindung oder dergleichen ausgebildet sein, um den Aktor bevorzugt lösbar an dem Kopplungselement zu befestigen. Ebenso kann das Kopplungselement eine weitere Formschlussgeometrie aufweisen, durch welche eine formschlüssige Verbindung zwischen dem Kopplungselement und dem Aktor ausbildbar ist. Die Formschlussgeometrie kann dabei derart ausgebildet sein, dass der Aktor unter Vermeidung zusätzlicher Befestigungselemente wie Schrauben oder Nietverbindungen fest mit der Verteilanordnung verbunden ist. Dadurch reduzieren sich die Montagekosten und die Montagezeit.

Die erfindungsgemäße Anordnung umfasst zumindest einen Aktor und zumindest eine Verteilanordnung gemäß einer der zuvor beschriebenen Ausführungsformen, wobei der Aktor durch das Adapterelement der Verteilanordnung aufgenommen ist. Alternativ zu dem Aktor kann die Anordnung statt des Aktors ein weiteres Funktionselement umfassen, welches mit der Verteilanordnung interagiert. Denkbar ist in diesem Zusammenhang beispielsweise, dass das Funktionselement als Sensor oder Orientierungsgeber ausgebildet ist. Weiter ist denkbar, dass die Anordnung eine Kombination aus einem Aktor und einem weiteren Funktionselement umfasst, welche vorzugsweise eine Baueinheit bilden und durch das Adapterelement aufgenommen sind.

Eine solche Anordnung findet insbesondere in einer Temperiereinrichtung, beispielsweise einer Temperiereinrichtung eines Elektrofahrzeugs, Verwendung. Zur Steuerung der Verteilanordnung ist der Aktor ausgebildet, ein Element der Verteilanordnung anzusteuern. Der Aktor bildet vorzugsweise einen Stellantrieb, beispielsweise in Form eines Elektromotors, um eine Stellbewegung des Elements anzusteuern.

In einer Weiterbildung der Ventilanordnung kann vorgesehen sein, dass der Aktor mit der Antriebswelle der Verteilanordnung gekoppelt ist und eingerichtet ist, das Funktionselement zu drehen.

Insbesondere sind der Aktor und das Funktionselement der Verteilanordnung durch die Antriebswelle in der Weise miteinander gekoppelt, dass durch den Aktor eine rotatorische Stellbewegung des Funktionselementes über die Antriebswelle angesteuert werden kann.

Bei dem erfindungsgemäßen Verfahren zur Herstellung einer Verteilanordnung, insbesondere eines Ventils gemäß einer der zuvor beschriebenen Ausführungsformen, werden ein aus polymerem Material bestehender Vorformling und ein Ventilkern bereitgestellt und in einer Blasform angeordnet, wobei aus dem Vorformling ein Gehäuse ausgebildet wird, in welchem der Ventilkern aufgenommen ist, wobei sich der Vorformling während des Ausformens zum Gehäuse mit einem Adapterelement verbindet.

Dabei kann gemäß einer ersten Ausgestaltung in der Blasform vor dem Blasformen ein Adapterelement angeordnet werden, wobei sich der Vorformling während des Blasformens an das in der Blasform angeordnete Adapterelement anlegt.

Gemäß einer zweiten Ausgestaltung des Verfahrens wird der Vorformling derart umgeformt, dass das Adapterelement zur Aufnahme des das Funktionselement beeinflussenden Aktors integral mit dem Gehäuse ausgebildet wird.

Durch dieses Verfahren kann bevorzugt in nur einem Verfahrensschritt des Blasformens sowohl das Gehäuse mit dem darin aufgenommenen Funktionselement ausgebildet werden als auch das Adapterelement an dem Gehäuse festgelegt werden.

Dabei kann das Adapterelement durch das Blasformen gemäß der ersten Ausgestaltung des Verfahrens als separates Bauteil formschlüssig und/oder stoffschlüssig mit dem Gehäuse verbunden werden oder gemäß der zweiten Ausgestaltung durch das Umformen des Gehäuses während des Blasformens integral mit dem Gehäuse ausgebildet werden. Auf diese Weise kann eine einfache, schnelle und somit kostenoptimierte Herstellung der Verteilanordnung erreicht sein.

Zudem bietet das Verfahren die Möglichkeit einer flexiblen Ausgestaltung des Adapterelements, sodass verschiedenartige Aktoren durch das Adapterelement aufgenommen werden können.

Der Vorformling zur Herstellung des Gehäuses kann vorzugsweise eine rohrförmige Ausgangsform aufweisen, insbesondere mit nur einem zusammenhängenden Innenraum. Durch das Blasformen aus einem solchen Vorformling kann das Gehäuse mit der darin vorgesehenen Kammer und dem darin angeordneten Funktionselement sowie dem zumindest einen in die Kammer mündenden Fluidkanal ausgebildet werden. Bevorzugt werden durch das Blasformen zumindest ein Einlasskanal und zumindest ein Auslasskanal ausgebildet, welche in die Kammer münden und über die Kammer strömungsleitend verbunden sind.

Die Schmelztemperaturen des Materials des Vorformlings und des Materials des Adapterelements können derart ausgewählt sein, dass zum Blasformen des Gehäuses ein Erweichen des Vorformlings ermöglicht ist, wobei das in der Blasform angeordnete Adapterelement während des Blasformvorgangs formstabil bleibt.

Einige Ausgestaltungen der erfindungsgemäßen Verteilanordnung und der erfindungsgemäßen Anordnung werden nachfolgend anhand der Figuren näher erläutert. Diese zeigen, jeweils schematisch:
- Fig. 1: eine perspektivische Ansicht eines Gehäuses nach dem Blasformen;
- Fig. 2: eine perspektivische Ansicht eines Gehäuses mit aufgesetztem Kopplungselement;
- Fig. 3: eine perspektivische Ansicht einer Anordnung;
- Fig. 4: eine Schnittansicht einer Anordnung mit einer Verteilanordnung gemäß Fig. 1 bis Fig. 3.

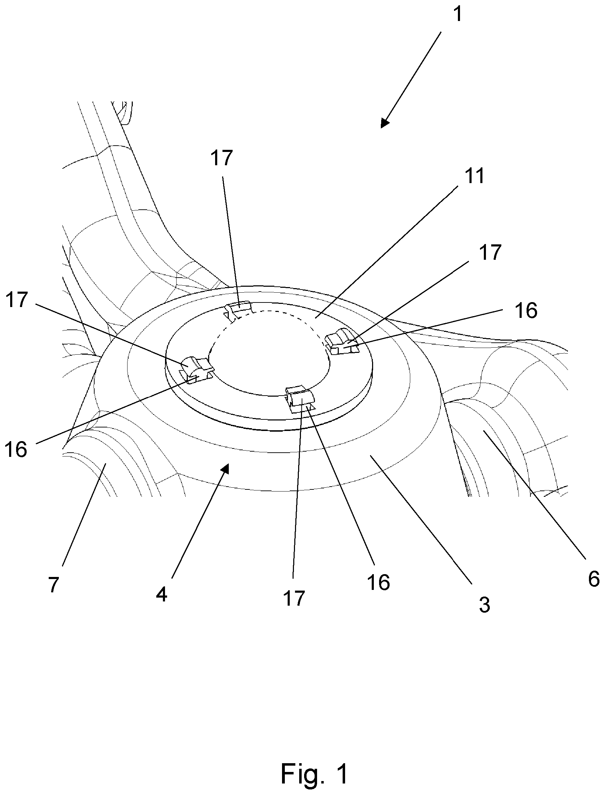

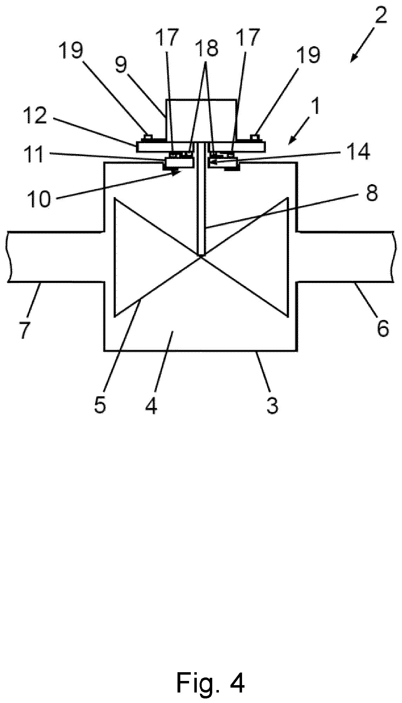

**Fig.** 1 zeigt ein als Blasformteil ausgebildetes Gehäuse 3 einer Verteilanordnung 1. Im Inneren des Gehäuses 3 ist eine Kammer 4 gebildet, in der ein Funktionselement 5 (Fig. 4) angeordnet ist. In die Kammer 4 mündet ein erster Fluidkanal 6, beispielsweise ein Einlasskanal, und ein zweiter Fluidkanal 7, beispielsweise ein Auslasskanal. Alternativ kann ebenso vorgesehen sein, dass in die Kammer 4 mehr als zwei Fluidkanäle 6, 7 münden. Beispielsweise können auch drei, vier, fünf, sechs oder mehr Fluidkanäle eines Temperierkreislaufs in die Kammer 4 der Verteilanordnung 1 münden.

In den in den Figuren gezeigten Ausgestaltungen ist die Verteilanordnung 1 als Rotationsventil ausgebildet. Dabei bilden das Funktionselement 5 einen Ventilkern, die Kammer 4 eine Ventilkammer und das Gehäuse 3 ein Ventilgehäuse. Der Ventilkern ist drehbar in dem Ventilgehäuse aufgenommen.

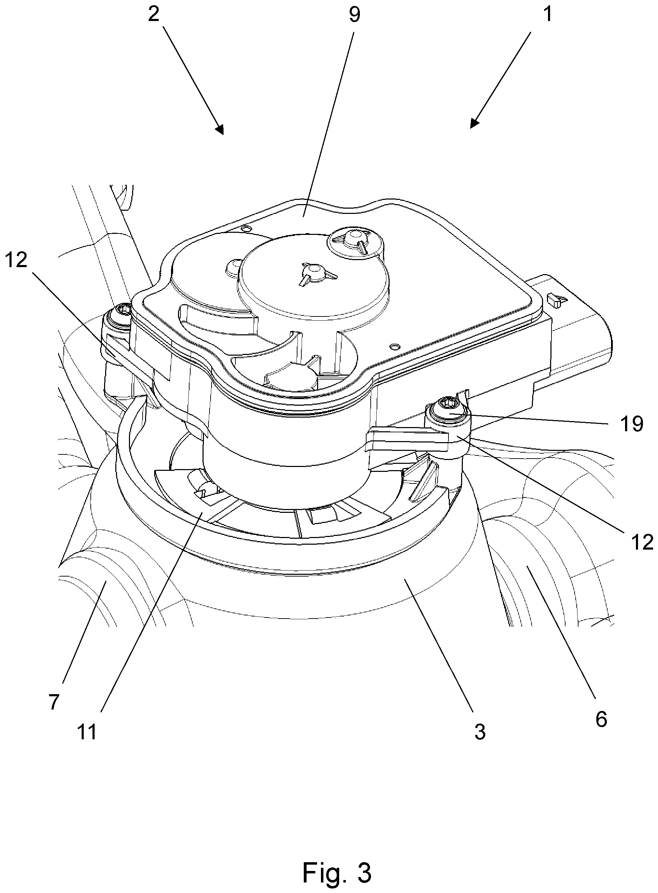

Zum Befestigen eines Aktors 9 ist an dem Gehäuse 3 ein Adapterelement 11 vorgesehen, das mit einem an dem Aktor 9 vorgesehenen Kopplungselement 12 zum Aufnehmen des Aktors 9 lösbar gekoppelt ist (Fig. 3).

Das Adapterelement 11 ist durch Umformen des Gehäuses 3 während des Blasformens an dem Gehäuse 3 festgelegt. Das Adapterelement 11 wird für den Blasformprozess insbesondere als separates Bauteil bereitgestellt und wird durch Umformen eines Vorformlings zum Gehäuse 3 mit diesem formschlüssig und/oder stoffschlüssig verbunden.

Hierzu sind das Gehäuse 3 und das Adapterelement 11 aus einem Kunststoffmaterial ausgebildet, beispielsweise Polypropylen, Polyamid oder einem Polyethylen. Ebenso können das Gehäuse 3 und das Adapterelement 11 aus anderen Materialien ausgebildet sein.

Vorzugsweise ist das Gehäuse 3 aus einem Kunststoff ausgebildet, dessen Schmelztemperatur für den Blasformprozess geeignet ist und unterhalb der Schmelztemperatur des für das Adapterelement 11 ausgewählten Kunststoffs liegt.

Das Adapterelement 11 kann beispielsweise aus einem spritzgießfähigen Kunststoff ausgebildet sein, dessen Schmelztemperatur derart gewählt ist, dass diese oberhalb der für den Blasformprozess zur Herstellung des Gehäuses 3 erforderlichen Temperatur liegt.

Das Adapterelement 11 ist formschlüssig und/oder stoffschlüssig an dem Gehäuse 3 festgelegt, wobei die formschlüssige und/oder stoffschlüssige Verbindung zwischen dem Gehäuse 3 und dem Adapterelement 11 durch Umformen des Vorformlings zum Gehäuse 3 während des Blasformens ausgebildet wird. Hierzu wird der Vorformling zusammen mit dem Adapterelement 11 in ein Blasformwerkzeug eingelegt, wobei sich der Vorformling während des Blasformens an das Adapterelement 11 anlegt und die formschlüssige und/oder stoffschlüssige Verbindung ausgebildet wird.

Durch den Blasformprozess wird der Vorformling in der Weise umgeformt, dass das Gehäuse 3 mit der darin ausgebildeten Kammer 4 und dem in die Kammer 4 mündenden ersten und zweiten Fluidkanal 6, 7 ausgeformt wird.

In einer alternativen Ausgestaltung der Verteilanordnung 1 können das Gehäuse 3 und das Adapterelement 11 ebenso als ein integral ausgebildetes Bauteil ausgebildet sein. Insbesondere kann das Adapterelement 11 durch Umformen des Gehäuses 3 während des Blasformens zusammen mit dem Gehäuse 3 integral ausgebildet sein. Das Gehäuse 3 und das Adapterelement 11 bilden dadurch ein zusammenhängendes integrales Blasformteil.

An dem Adapterelement 11 können mehrere Formschlusselemente ausgebildet sein, durch welche die formschlüssige Verbindung zwischen dem Gehäuse 3 und dem Adapterelement 11 durch das Blasformen ausgebildet ist. Die Formschlusselemente sind beispielsweise als Vertiefungen und/oder Vorsprünge an dem Adapterelement 11 ausgebildet. Durch das Umformen des Gehäuses 3 während des Blasformprozesses legt sich dieses an die Formschlusselemente an, beispielsweise greift es an diese an oder greift in diese ein, wodurch die formschlüssige Verbindung ausgebildet wird.

Das Adapterelement 11 kann eine beliebige geometrische Ausgestaltung aufweisen, beispielsweise kann dieses eine im Wesentlichen ringförmige, scheibenförmige oder plattenförmige Grundform aufweisen.

**Fig. 1** zeigt das Gehäuse 3 mit dem daran befestigten Adapterelement 11 nach dem Blasformen. Die zentral in dem Adapterelement 11 vorgesehene Öffnung 10 ist noch verschlossen und wird in einem nachfolgenden Verfahrensschritt geöffnet.

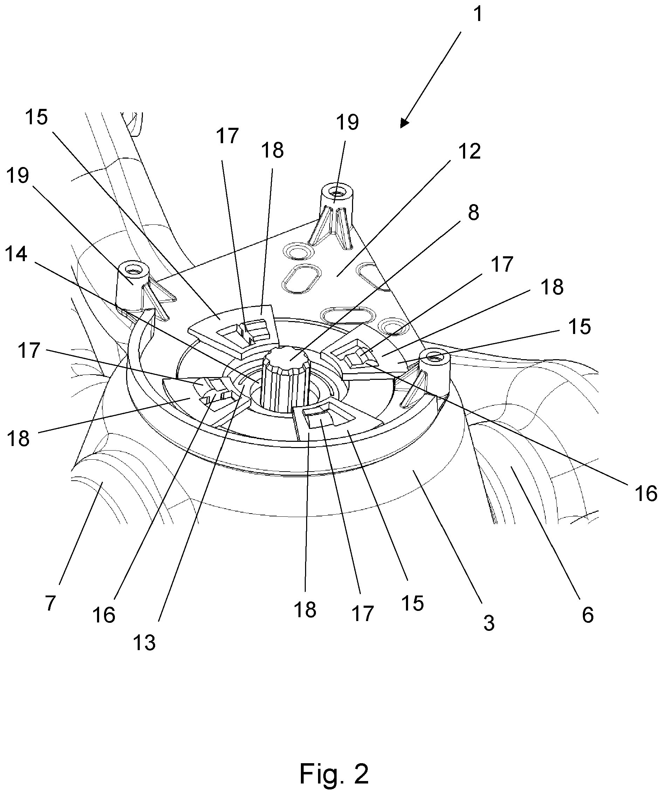

Prinzipiell ist denkbar, ein Funktionselement, beispielsweise einen Aktor oder einen Sensor direkt auf den Adapterelement 11 zu befestigten. Dies ist insbesondere dann denkbar, wenn nur geringe Kräfte oder Drehmomente auf das Adapterelement 11 bzw. auf die Formschlusselemente des Adapterelementes 11 einwirken. Bei dieser einfachen Ausgestaltung entfällt das in den **Fig. 2** bis **4** gezeigte Kopplungselement 12.

**Fig. 2** zeigt das Gehäuse 3 der Verteilanordnung 1 mit aufgesetztem und formschlüssig befestigten Adapterelement 11. Die zentral dem Adapterelement 11 zugeordnete Öffnung 10 ist hergestellt und die Antriebswelle 8 des Funktionselementes 5 ist zugänglich.

**Fig. 3** zeigt die Verteilanordnung 1 gemäß **Fig. 2** mit aufgesetztem Aktor 9. Die in **Fig. 3** gezeigte Verteilanordnung 1 bildet eine Komponente einer in **Fig. 4** dargestellten Anordnung 2. Eine solche Anordnung 2 kommt beispielsweise in einem nicht näher dargestellten Temperierkreislauf eines Elektrofahrzeugs zum Einsatz. Durch die Anordnung 2 können ein Volumenstrom eines in dem Temperierkreislauf strömenden Temperiermediums, z. B. Kühlmittel in Form von Kühlwasser, oder auch andere Medien geregelt und/oder verteilt werden und zu den zu temperierenden oder sonstigen Komponenten des Elektrofahrzeugs geleitet werden, beispielsweise zu den Akkumulatoren, den Elektromotoren, der Leistungselektronik oder den Wärmeübertragern für eine Fahrgastzellentemperierung.

Die Verteilanordnung 1 umfasst ein als Blasformteil ausgebildetes Gehäuse 3. Im Inneren des Gehäuses 3 ist eine Kammer 4 gebildet, in der ein Funktionselement 5 (**Fig. 4**) angeordnet ist. In die Kammer 4 münden ein erster Fluidkanal 6, beispielsweise ein Einlasskanal, und ein zweiter Fluidkanal 7, beispielsweise ein Auslasskanal. Alternativ kann ebenso vorgesehen sein, dass in die Kammer 4 mehr als zwei Fluidkanäle 6, 7 münden. Beispielsweise können auch drei, vier, fünf, sechs oder mehr Fluidkanäle eines Temperierkreislaufs in die Kammer 4 der Verteilanordnung 1 münden.

Das Funktionselement 5, hier der Ventilkern, ist in der Kammer 4 drehbar gelagert. Die Verteilanordnung 1 ist somit als ein Rotationsventil ausgebildet. Bei einem solchen Rotationsventil können durch eine Drehbewegung des Funktionselementes 5 in der Kammer 4 die Fluidkanäle 6, 7 beispielsweise selektiv geöffnet oder verschlossen werden, fluidisch miteinander verbunden oder entkoppelt werden und/oder es kann in Abhängigkeit von einer entsprechenden Ventilstellung ein Volumenstrom des in den Fluidkanälen 6, 7 strömenden Mediums geregelt werden.

Zum Ansteuern einer solchen Drehbewegung ist das Funktionselement 5 über eine Antriebswelle 8 mit einem in **Fig. 3** dargestellten Aktor 9 gekoppelt. Hierzu ist die Antriebswelle 8 durch eine in dem Gehäuse 3 vorgesehene Öffnung 10 herausgeführt und mit dem an einer Außenseite des Gehäuses 3 angeordneten Aktor 9 verbunden. Der Aktor 9 bildet einen Stellantrieb, beispielsweise in Form eines Elektromotors, und bewirkt über die Antriebswelle 8 die Drehbewegung des Funktionselementes 5 innerhalb der Kammer 4.

Gemäß der in den **Fig. 1** und **2** dargestellten Ausführungsform weist das Adapterelement 11 ein Mittelteil 13 auf, das eine kreisringförmige Form bildet. Durch das kreisringförmige Mittelteil 13 ist ein zentraler Durchgang 14 gebildet, durch welchen die Antriebswelle 8 aus der Kammer 4 herausgeführt ist.

An einem Außenumfang des Mittelteils 13 sind vier Halteabschnitte 15 ausgebildet, durch welche das Adapterelement 11 an dem Gehäuse 3 festgelegt ist. Es versteht sich, dass das Adapterelement 11 auch weniger als vier oder mehr als vier Halteabschnitte 15 aufweisen kann. Das Adapterelement 11 ist durch das Mittelteil 13 und die Halteabschnitte 15 als ein integrales Bauteil ausgebildet.

Die Halteabschnitte 15 bilden jeweils Haltearme 16, die sich in radialer Richtung vom Mittelteil 13 weg erstrecken. Die Haltearme 16 sind an einem die Öffnung 10 begrenzenden Randbereich des Gehäuses 3 angebracht, insbesondere durch die zuvor beschriebene formschlüssige und/oder stoffschlüssige Verbindung durch den Blasformprozess. Hierzu sind bevorzugt an den Haltearmen 16 die Formschlusselemente zum Ausbilden der formschlüssigen und/oder stoffschlüssigen Verbindung zwischen dem Gehäuse 3 und dem Adapterelement 11 ausgebildet. Durch die Haltearme 16 ist das Mittelteil 13 des Adapterelements 11 in einem zentralen Bereich der im Gehäuse 3 vorgesehenen Öffnung 10 angeordnet.

An den Halteabschnitten 15 des Adapterelements 11 ist eine Formschlussgeometrie 17 ausgebildet. Diese Formschlussgeometrie 17 ist korrespondierend zu einer weiteren Formschlussgeometrie 18 an dem Kopplungselement 12 ausgebildet, sodass das Kopplungselement 12 mit dem Adapterelement 11 lösbar gekoppelt werden kann. Die Formschlussgeometrie 17 am Adapterelement 11 und die Formschlussgeometrie 18 am Kopplungselement 12 bilden gemeinsam ein Bajonett-Verschluss zum Koppeln des Adapterelements 11 mit dem Kopplungselement 12.

Das Kopplungselement 12 bildet ein plattenförmiges Bauteil, welches eine beliebige geometrische Ausgestaltung aufweisen kann. In dem Kopplungselement 12 ist eine Durchbrechung vorgesehen, durch welche die aus dem Gehäuse 3 herausgeführte Antriebswelle 8 verläuft.

An dem Kopplungselement 12 sind mehrere Verbindungsmittel 19 vorgesehen, durch welche der Aktor 9 an dem Kopplungselement 12 befestigt ist. Die Verbindungsmittel 19 sind vorzugsweise durch Schraubelemente ausgebildet. Alternativ können die Verbindungsmittel 19 ebenso als Rastverbindung, Clipsverbindung, Nietverbindung, Schweißverbindung, Klebeverbindung oder dergleichen zum Befestigen des Aktors 9 an dem Kopplungselement 12 ausgebildet sein. Alternativ kann das Kopplungselement 12 auch eine Komponente eines Gehäuses des Aktors 9 bilden.

## Patentansprüche

1. Verteilanordnung (1), umfassend ein als Blasformteil ausgebildetes Gehäuse (3) mit einer Kammer (4), wobei in die Kammer (4) zumindest ein Fluidkanal (6, 7) mündet, wobei in der Kammer (4) ein Funktionselement (5) beweglich aufgenommen ist, wobei an dem Gehäuse (3) ein Adapterelement (11) zur Aufnahme eines das Funktionselement (5) beeinflussenden Aktors (9) angeordnet ist, **dadurch gekennzeichnet, dass** das Adapterelement (11) durch Umformen des Gehäuses (3) während des Blasformens an dem Gehäuse (3) festgelegt ist.

2. Verteilanordnung nach Anspruch 1, **dadurch gekennzeichnet, dass** das Adapterelement (11) durch Umformen des Gehäuses (3) während des Blasformens integral mit dem Gehäuse (3) ausgebildet ist.

3. Verteilanordnung nach Anspruch 1, **dadurch gekennzeichnet, dass** das Adapterelement (11) formschlüssig und/oder stoffschlüssig mit dem Gehäuse (3) verbunden ist.

4. Verteilanordnung nach Anspruch 1 oder 3, **dadurch gekennzeichnet, dass** das Adapterelement (11) mehrere Formschlusselemente aufweist, die mit dem Gehäuse (3) verbunden sind.

5. Verteilanordnung nach einem der Ansprüche 1 bis 4, **dadurch gekennzeichnet, dass** die Verteilanordnung (1) ein Rotationsventil, das Funktionselement (5) einen Ventilkern und das Gehäuse (3) ein Ventilgehäuse bilden, wobei der Ventilkern in dem Gehäuse drehbar gelagert ist.

6. Verteilanordnung nach Anspruch 5, **dadurch gekennzeichnet, dass** das Funktionselement (5) mit einer Antriebswelle (8) versehen ist, die aus dem Gehäuse (3) durch eine in dem Gehäuse (3) vorgesehenen Öffnung (10) herausgeführt ist.

7. Verteilanordnung nach Anspruch 6, **dadurch gekennzeichnet, dass** das Adapterelement (11) einen Durchgang (14) aufweist, durch welchen die aus dem Gehäuse (3) herausgeführte Antriebswelle (8) verläuft.

8. Verteilanordnung nach Anspruch 7, **dadurch gekennzeichnet, dass** das Adapterelement (11) ein Mittelteil (13) aufweist, in dem der Durchgang (14) ausgebildet ist, und mehrere Halteabschnitte (15) aufweist, durch welche das Adapterelement (11) an dem Gehäuse (3) festgelegt ist.

9. Verteilanordnung nach Anspruch 8, **dadurch gekennzeichnet, dass** die Halteabschnitte (15) als Haltearme (16) an dem Mittelteil (13) ausgebildet sind, wobei die Haltearme (16) das Mittelteil (13) innerhalb der in dem Gehäuse (3) vorgesehenen Öffnung positionieren.

10. Verteilanordnung nach einem der Ansprüche 1 bis 9, **dadurch gekennzeichnet, dass** das Adapterelement (11) eine Formschlussgeometrie (17) aufweist, die mit einer korrespondierenden Formschlussgeometrie (18) an einem Kopplungselement (12) zur Befestigung des Aktors (9) oder an dem Aktor (9) lösbar gekoppelt ist.

11. Anordnung (2), umfassend zumindest einen Aktor (9) und zumindest eine Verteilanordnung (1) nach einem der Ansprüche 1 bis 10, wobei der Aktor (9) durch das Adapterelement (11) der Verteilanordnung (1) aufgenommen ist.

12. Anordnung nach Anspruch 11, **dadurch gekennzeichnet, dass** der Aktor (9) mit der Antriebswelle (8) der Verteilanordnung (1) gekoppelt und eingerichtet ist, das Funktionselement (5) zu drehen.

13. Verfahren zur Herstellung einer Verteilanordnung (1), insbesondere einer Verteilanordnung (1) nach einem der Ansprüche 1 bis 10, bei welchem ein aus polymerem Material bestehender Vorformling und ein Funktionselement (5) bereitgestellt und in einer Blasform angeordnet werden, wobei aus dem Vorformling ein Gehäuse (3) ausgebildet wird, in welchem das Funktionselement (5) aufgenommen ist, wobei sich der Vorformling während des Ausformens zum Gehäuse (3) mit einem Adapterelement (11) verbindet.

14. Verfahren nach Anspruch 13, **dadurch gekennzeichnet, dass** in der Blasform vor dem Blasformen ein Adapterelement (11) angeordnet wird und sich der Vorformling während des Blasformens an das in der Blasform angeordnete Adapterelement (11) anlegt.

15. Verfahren nach Anspruch 13 oder 14, **dadurch gekennzeichnet, dass** der Vorformling derart umgeformt wird, dass das Adapterelement (11) zur Aufnahme des das Funktionselement (5) beeinflussenden Aktors (9) integral mit dem Gehäuse (3) ausgebildet wird.
